# EUROPEAN PATENT APPLICATION

(11) **EP 2 371 902 A1**
(43) Date of publication of application: **05.10.2011**
(21) Application number: 09835024.2
(22) Date of filing: 25.12.2009
(51) Int. Cl.: C08L 69/00, C08K 5/13, C08K 5/36, C08K 5/49, C08L 97/02

(54) **POLYCARBONATE RESIN COMPOSITION**

(30) Priority: 25.12.2008 JP 2008331366; 27.02.2009 JP 2009047106
(71) Applicant: Idemitsu Kosan Co., Ltd., Chiyoda-ku Tokyo 100-8321 (JP); Mie University, Mie 514-8507 (JP)
(72) Inventor: NODERA, Akio, Ichihara-shi Chiba 299-0193 (JP); MUKAWA, Naosuke, Ichihara-shi Chiba 299-0193 (JP); FUNAOKA, Masamitsu, Tsu-shi Mie 514-8507 (JP)
(74) Representative: Gille Hrabal Struck Neidlein Prop Roos
(86) International application number: PCT/JP2009/071586
(87) International publication number: WO 2010/074228

(57) **Abstract**

Provided is a polycarbonate resin composition which has: a high degree of biomass (degree of vegetation); is excellent in environmental performance; has high fluidity and high impact resistance; is excellent in flame retardancy and heat resistance; and further provides a molded body excellent in molding appearance, by blending (B) a lignophenol at a specific ratio into (A) a polycarbonate resin or a resin mixture formed of the component (A) and (C) a polylactic acid and/or a copolymer containing a polylactic acid.

## Description

### [Technical Field]

The present invention relates to a polycarbonate resin composition, and more specifically, to a polycarbonate resin composition which is excellent in environmental performance, has high fluidity and high impact resistance, is excellent in flame retardancy and heat resistance, and provides a molded body excellent in molding appearance by using a biomass material.

### [Background Art]

Biomass materials such as biodegradable polyester resins have been attracting attention in recent years from the viewpoint of environmental protection. Representative examples of the biodegradable polyester resins include polylactic acids. However, the applications of the biomass materials are limited to an extremely narrow range because the materials show low mechanical strength and are poor in heat resistance as compared with petroleum-based, general-purpose plastics in general.
In light of the foregoing, with a view to expanding the applicability of the biomass materials, an attempt has been made to improve the mechanical strength of a resin molded body by blending a polylactic acid with a petroleum-based polymer such as an aromatic polycarbonate resin or by blending a biodegradable resin with a vegetable fiber material subjected to a delignification treatment (see, for example, Patent Literature 1 or 2). However, it cannot be said that the resin molded body necessarily has sufficient impact resistance and sufficient heat resistance. Accordingly, the resin molded body does not sufficiently satisfy characteristics requested of the casings and parts of household electrical appliances and business machines.

Further, an attempt has been made to improve the mechanical strength of a resin molded body by blending an aliphatic polyester and a lignophenol to increase a degree of biomass (see, for example, Patent Literature 3). However, it is hard to say that a resin molded body having sufficient impact resistance can be obtained. Moreover, to impart high flame retardancy to the resin molded body requires the addition of a flame retardant. In addition, Patent Literature 3 describes neither the blending of a lignophenol into polycarbonate nor the achievement of compatibility between improvements in the various characteristics of the polycarbonate and an excellent molding appearance.

### [Related Art Documents]

### [Patent Documents]

[PTL 1] JP 2005-48067 A
[PTL 2] JP 2005-60556 A
[PTL 3] JP 2008-50446 A

### [Summary of the Invention]

### [Problems to be solved by the Invention]

An object of the present invention is to provide a polycarbonate resin composition which: has a high degree of biomass (degree of vegetation); is excellent in environmental performance; has high fluidity and high impact resistance; and is excellent in flame retardancy and heat resistance.
Another object of the present invention is to provide a polycarbonate resin composition that not only has the above-mentioned characteristics but also provides a molded body excellent in molding appearance.

### [Means for solving the Problems]

The inventors of the present invention have made extensive studies, and as a result, have found that the above-mentioned objects are achieved by blending a lignophenol as a component (B) at a specific ratio into (A) a polycarbonate resin or a resin mixture formed of (A) the polycarbonate resin and (C) a polylactic acid and/or a copolymer containing a polylactic acid. Thus, the inventors have completed the present invention.
That is, the present invention provides the following polycarbonate resin composition.

1. A polycarbonate resin composition, comprising:
   99 to 50 mass% of (A) a polycarbonate resin; and
   1 to 50 mass% of (B) a lignophenol having a structure represented by the following general formula (I):

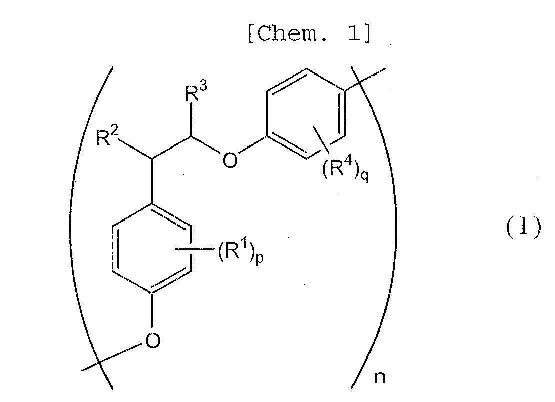

[wherein R¹ and R⁴ each independently represent an alkyl group, an aryl group, an alkoxy group, an aralkyl group, or a phenoxy group;
R² represents a hydrogen atom, an alkyl group, an aryl group, an alkyl-substituted aryl group, an alkoxy group, or a phenoxy group;
R³ represents an alkyl group, an aryl group, an alkyl -substituted aryl group, or -OR⁵ (where R⁵ represents a hydrogen atom, an alkyl group, or an aryl group);
R¹ to R⁵ except hydrogen atoms may each have a substituent;
p and q each independently represent an integer of 0 to 4; and
n represents an integer of 1 or more].
2. A polycarbonate resin composition, comprising 1 to 50 parts by mass of (B) a lignophenol having a structure represented by the following general formula (I) with respect to 100 parts by mass of a resin mixture formed of 99 to 50 mass% of (A) a polycarbonate resin and 1 to 50 mass% of (C) a polylactic acid and/or a copolymer containing a polylactic acid:

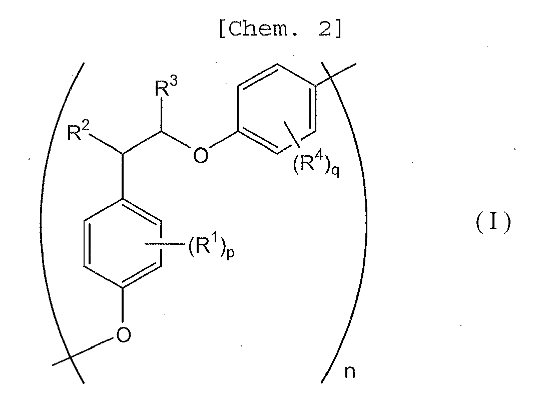

[wherein R¹ and R⁴ each independently represent an alkyl group, an aryl group, an alkoxy group, an aralkyl group, or a phenoxy group;
R² represents a hydrogen atom, an alkyl group, an aryl group, an alkyl-substituted aryl group, an alkoxy group, or a phenoxy group;
R³ represents an alkyl group, an aryl group, an alkyl -substituted aryl group, or -OR⁵ (where R⁵ represents a hydrogen atom, an alkyl group, or an aryl group);
R¹ to R⁵ except hydrogen atoms may each have a substituent;
p and q each independently represent an integer of 0 to 4; and
n represents an integer of 1 or more].

3. The polycarbonate resin composition according to the above-mentioned item 2, wherein the copolymer containing the polylactic acid in the component (C) is a copolymer of the polylactic acid and an aliphatic polyester except the polylactic acid.
4. The polycarbonate resin composition according to any one of the above-mentioned items 1 to 3, wherein (A) the polycarbonate resin is an aromatic polycarbonate resin.
5. The polycarbonate resin composition according to any one of the above-mentioned items 1 to 4, further including an antioxidant.

### [Advantageous Effects of Invention]

According to the present invention, the following polycarbonate resin composition can be obtained by using a lignophenol serving as an environmentally friendly biomass raw material. The polycarbonate resin composition can excellently correspond to measures needed for environmental protection such as the curtailment of carbon dioxide emissions and the reduction of fossil materials, and further, has high fluidity and excellent flame retardancy without impairing its high impact resistance, high heat resistance, and the like characteristic of polycarbonate.
In addition, the lignophenol has a good affinity for polycarbonate, and hence a molded article such as an incompatible polymer alloy shows neither surface layer peeling nor an external appearance failure. In particular, a polycarbonate resin composition that provides a molded body excellent in molding appearance can be provided by blending the lignophenol into a polymer alloy of the polycarbonate and a polylactic acid or the like.

### [Mode for Carrying Out the Invention]

A polycarbonate resin composition of the present invention is obtained by incorporating (B) a lignophenol at a specific ratio into (A) a polycarbonate resin or a resin mixture formed of (A) the polycarbonate resin and (C) a polylactic acid and/or a copolymer containing a polylactic acid. Hereinafter, the respective components and other components that can be added are described.

### [Component (A)]

Although (A) the polycarbonate resin may be an aromatic polycarbonate resin or an aliphatic polycarbonate resin, an aromatic polycarbonate resin is preferably used as the resin.

### (Aromatic polycarbonate resin)

An aromatic polycarbonate resin produced by a reaction between a dihydric phenol and a carbonate precursor can be typically used as the aromatic polycarbonate resin. The aromatic polycarbonate resin can be used as a main component of the resin composition because the resin is superior in heat resistance, flame retardancy, and impact resistance to any other thermoplastic resin.

Various examples may be given of the dihydric phenol and include: 4,4'-dihydroxydiphenyl; bis(4-hydroxyphenyl)alkanes such as 1,1-bis(4-hydroxyphenyl)methane, 1,1-bis(4-hydroxyphenyl)ethane, and 2,2-bis(4-hydroxyphenyl)propane [bisphenol A]; bis(4-hydroxyphenyl)cycloalkane; bis(4-hydroxyphenyl)oxide; bis(4-hydroxyphenyl)sulfide; bis(4-hydroxyphenyl)sulfone; bis(4-hydroxyphenyl)sulfoxide; bis(4-hydroxyphenyl)ketone; and the like. Of those, bisphenol A is preferred. The dihydric phenol may be a homopolymer using one kind of the dihydric phenols, or may be a copolymer using two or more kinds thereof. Further, a thermoplastic, randomly branched polycarbonate obtained by using a polyfunctional aromatic compound and the dihydric phenol in combination is permitted.
Examples of the carbonate precursor include a carbonyl halide, a haloformate, a carbonate ester, and the like. Specific examples thereof include phosgene, dihaloformate of a dihydric phenol, diphenyl carbonate, dimethyl carbonate, diethyl carbonate, and the like.

A terminal stopper can be used as required in the production of the aromatic polycarbonate resin to be used in the present invention, and examples of the terminal stopper may include monohydric phenol compounds represented by the following general formula (1).

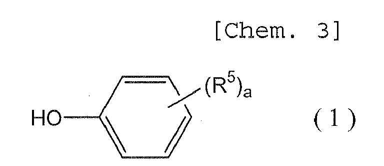

### (In the formula, R⁵ represents an alkyl group having 1 to 35 carbon atoms, and a represents an integer of 0 to 5.)

As the monohydric phenol compound represented by the general formula (1), a para substituent is preferred. Specific examples of the monohydric phenol compound may include phenol, p-cresol, p-tert-butylphenol, p-tert-octylphenol, p-cumylphenol, p-nonylphenol, p-tert-amylphenol, and the like. Those monohydric phenol compounds may be used alone, or two or more kinds thereof may be used in combination.

The aromatic polycarbonate resin to be used in the present invention may have a branching structure. A branching agent may be used to introduce a branching structure, and there may be used, for example, compounds each having three of more functional groups such as 1,1,1-tris(4-hydroxyphenyl)ethane, α , α', α "-tris(4-hydroxyphenyl)-1,3,5-triisopropylbenzene, 1-[α-methyl-α-(4'-hydroxyphenyl)ethyl]-4-[α', α '-bis(4"-hydroxyphenyl)ethyl]benzene, phloroglucine, trimellitic acid, and isatinbis(o-cresol).
The aromatic polycarbonate resin to be used in the present invention has a viscosity-average molecular weight of preferably 10,000 to 40,000, more preferably 13,000 to 30,000 in terms of the physical properties of the resin composition.

In addition, the aromatic polycarbonate resin in the present invention is preferably an aromatic polycarbonate-polyorganosiloxane copolymer (which may hereinafter be abbreviated as "aromatic PC-POS copolymer") or a resin containing an aromatic PC-POS copolymer in terms of improvements in heat resistance, flame retardancy, and impact resistance. Further, a resin whose POS is polydimethylsiloxane is more preferred in terms of flame retardancy.

The aromatic PC-POS copolymer has a terminal group represented by the following general formula (2), and examples of the copolymer may include copolymers disclosed in JP 50-29695 A, JP 3-292359 A, JP 4-202465 A, JP 8-81620 A, JP 8-302178 A, and JP 10-7897 A. In the following general formula (2), an alkyl group having 1 to 35 carbon atoms represented by R⁶ may be linear or branched, and its bonding position, which may be any one of para, meta, and ortho positions, is preferably the para position, and b represents an integer of 0 to 5.

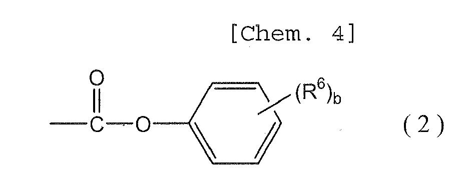

Preferred examples of the aromatic PC-POS copolymer may include copolymers each having, in any one of its molecules, a polycarbonate segment formed of a structural unit represented by the following general formula (3) and a polyorganosiloxane segment formed of a structural unit represented by the following general formula (4).

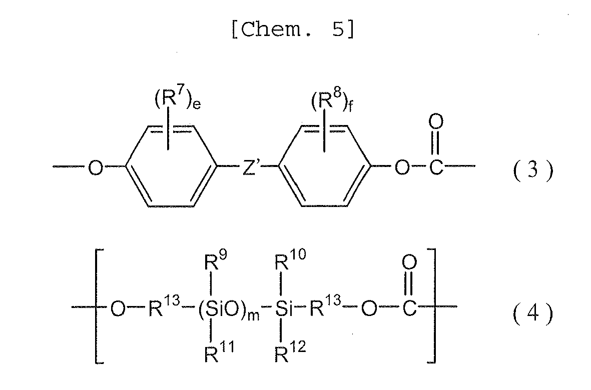

R⁷ and R⁸ each represent an alkyl group having 1 to 6 carbon atoms or a phenyl group, and may be identical to or different from each other. R⁹ to R¹² each represent an alkyl group having 1 to 6 carbon atoms or a phenyl group, preferably a methyl group, and R⁹ to R¹² may be identical to or different from one another. R¹³ represents a divalent organic group containing an aliphatic or aromatic group, preferably a divalent group represented by any one of the following formulae.

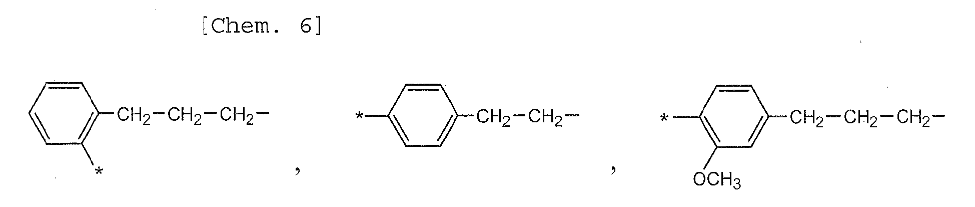

(The mark * represents a bond to be bonded to the oxygen atom.)

Z' represents a single bond, an alkylene group having 1 to 20 carbon atoms, an alkylidene group having 2 to 20 carbon atoms, a cycloalkylene group having 5 to 20 carbon atoms, a cycloalkylidene group having 5 to 20 carbon atoms, or a -SO₂-, -SO-, -S-, -O-, or -CO- bond, preferably an isopropylidene group, and e and f each represent an integer of 0 to 4, preferably 0. m represents an integer of 1 to 500, preferably 5 to 300, more preferably 15 to 200, still more preferably 30 to 150.

The aromatic PC-POS copolymer can be produced by, for example, a method involving: dissolving a polycarbonate oligomer of which the polycarbonate segment is formed and a polyorganosiloxane having a reactive group -R¹³-OH (where R¹³ has the same meaning as that described above) at a terminal (reactive POS) of which the polyorganosiloxane segment is formed, the polycarbonate oligomer and the reactive POS being produced in advance, in a solvent such as methylene chloride, chlorobenzene, or chloroform; adding an alkali hydroxide solution of a dihydric phenol to the solution; and subjecting the mixture to an interfacial polycondensation reaction with a tertiary amine (e,g., triethylamine) or a quaternary ammoniumsalt(e.g.,trimethylbenzylammonium chloride)as a catalyst in the presence of a general terminal stopper formed of a phenol compound represented by the following general formula (5) . In the following general formula (5), R⁵ and a each have the same meaning as that described above.

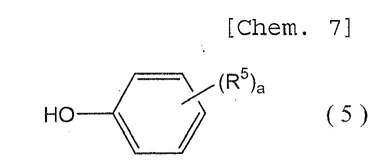

Examples of the phenol compound represented by the above-mentioned general formula (5) to be used in the production of the aromatic PC-POS copolymer may include the same compounds as the specific examples of the monohydric phenol compound represented by the general formula (1).
The polycarbonate oligomer to be used in the production of the aromatic PC-POS copolymer can be easily produced by, for example, a reaction between a dihydric phenol and a carbonate precursor such as phosgene or a carbonate compound, or an ester exchange reaction between the dihydric phenol and a carbonate precursor such as diphenyl carbonate in a solvent such as methylene chloride.

Here, any one of the same compounds as the exemplified compounds can be used as the dihydric phenol, and of those, bisphenol A is preferred. Any one of the same compounds as the exemplified compounds can be used as the carbonate compound.
In addition, the polycarbonate oligomer may be a homopolymer using one kind of the above-mentioned dihydric phenols, or may be acopolymerusingtwoormorekinds thereof. Further, athermoplastic, randomly branched polycarbonate obtained by using a polyfunctional aromatic compound and any one of the above-mentioned dihydric phenols in combination is permitted.
In this case, as a branching agent (polyfunctional aromatic compound), any one of the same compounds as the exemplified compounds may be used.

The aromatic PC-POS copolymer, which can be produced as described above, is generally produced as an aromatic polycarbonate containing a polycarbonate-polyorganosiloxane copolymer because an aromatic polycarbonate is produced as a by-product.
It should be noted that the aromatic PC-POS copolymer produced by the above-mentioned method practically has the aromatic terminal group represented by the general formula (2) at one side, or each of both sides, of any one of its molecules.

### (Aliphatic polycarbonate resin)

The aliphatic polycarbonate resin is preferably a resin having an alkyl group having 4 or more carbon atoms, and examples of the resin include polybutylene carbonate, polyhexane carbonate, polyoctane carbonate, and the like. Oligomers of the polymers are similarly used.
A block copolymer can be obtained by causing those polymers or oligomers having hydroxyl groups at their terminals and a lactide to react with each other in molten states. In that case, the aliphatic polycarbonate resin has a molecular weight of preferably 4,000 or more, particularly preferably 6,000 or more. An aliphatic polycarbonate resin having a molecular weight of 8,000 to 300,000 is most widely used.

### [Component (B)]

In the present invention, as the component (B), there is used a lignophenol having a structure represented by the following general formula (I).

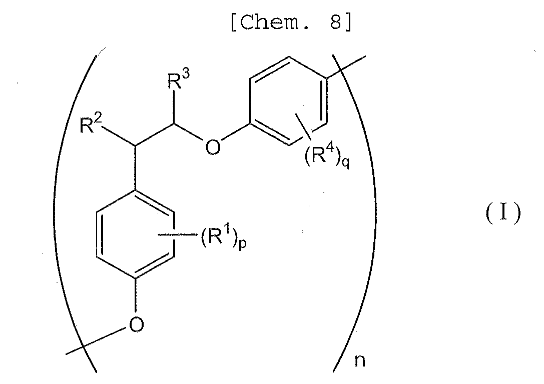

In the general formula (I), R¹ and R⁴ each independently represent an alkyl group (e.g., a methyl group, an ethyl group, or a propyl group), an aryl group (e.g., a phenyl group), an alkoxy group (e.g. , a methoxy group, an ethoxy group, or a propoxy group), an aralkyl group (e.g., a benzyl group), or a phenoxy group.
R² represents a hydrogen atom, an alkyl group (e,g., a methyl group, an ethyl group, or a propyl group), an aryl group (e.g., a phenyl group), an alkyl-substituted aryl group, an alkoxy group (e.g., a methoxy group, an ethoxy group, or a propoxy group), or a phenoxy group.
R³ represents an alkyl group (e.g., a methyl group, an ethyl group, or a propyl group), an aryl group (e.g., a phenyl group), an alkyl-substituted aryl group, or -OR⁵ (R⁵ represents a hydrogen atom, an alkyl group, or an aryl group).
R¹ to R⁵ except hydrogen atoms may each have a substituent, p and q each independently represent an integer of 0 to 4, and n represents an integer of 1 or more.
In addition, a specific structure represented by the above-mentioned general formula (I) of the component (B) that can be used in the present invention is, for example, the following structure.

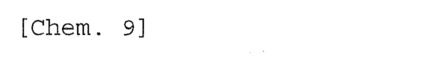

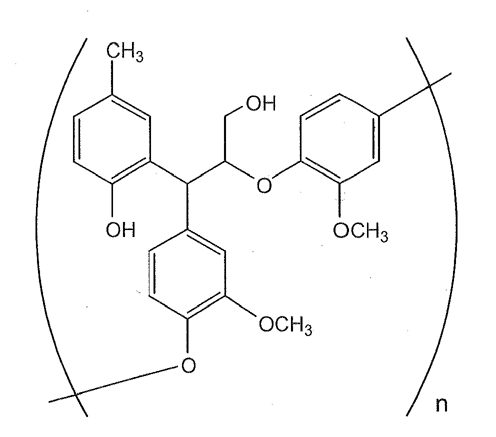

(n represents an integer of 1 or more.)

### (Lignophenol)

The lignophenol is a compound derived from lignin in lumber, paper, or the like, and lignin serves as an intercellular bonding substance filled in the gaps of a carbohydrate of which, for example, the cytoskeleton of wood is formed. The transformation of lignin into the lignophenol before use is of value because lignin is of so complicated a structure that it is hard to use lignin as it is.

The component (B) of the present invention refers to a lignophenol derivative having a structure represented by the above-mentioned general formula (I), the derivative being obtained by: adding a phenol derivative to a lignocellulose-based substance such as lumber or paper; and hydrolyzing the resultant with an acid to separate the resultant into a lignophenol derivative and a carbohydrate. In addition, the component comprehends an alkali-treated derivative of the above-mentioned lignophenol derivative, or a derivative obtained by protecting a hydroxyl group in the above-mentioned lignophenol derivative or in the alkali-treated derivative of the above-mentioned lignophenol derivative.

Examples of the lignocellulose-based substance may include lignified materials, and various materials mainly formed of lumber such as wood dust, chips, discarded materials, and edge materials. In addition, any kind of lumber such as a coniferous tree or a broadleaf tree can be used as the lumber to be used. Further, various herbaceous plants, and samples related to the plants such as agricultural wastes can also be used.

A monohydric phenol derivative, a dihydric phenol derivative, a trihydric phenol derivative, or the like can be used as the phenol derivative. Specific examples of the monohydric phenol derivative include phenol which may have one or more substituents, naphthol which may have one or more substituents, anthrol which may have one or more substituents, anthroquinonol which may have one or more substituents, and the like. Specific examples of the dihydric phenol derivative include catechol which may have one or more substituents, resorcinol which may have one or more substituents, hydroquinone which may have one or more substituents, and the like. The trihydric phenol derivative is specifically, for example, pyrogallol which may have one or more substituents.

The kind of substituent which the phenol derivative may have is not particularly limited, and the derivative may have any substituent. The substituent is preferably a group except an electron-withdrawing group (e.g., a halogen atom) such as an alkyl group (e.g., a methyl group, an ethyl group, or a propyl group), an alkoxy group (e.g., a methoxy group, an ethoxy group, or a propoxy group), or an aryl group (e.g., a phenyl group). In addition, at least one of the two ortho positions with respect to a phenolic hydroxyl group on the phenolderivativeispreferably unsubstituted. The phenol derivative is particularly preferably, for example, cresol, in particular, m-cresol or p-cresol.

The acid is preferably an acid having swelling property with respect to cellulose. Specific examples of the acid include sulfuric acid having a concentration of 65 mass% or more (e.g., sulfuric acid having a concentration of 72 mass%), phosphoric acid having a concentration of 85 mass% or more, hydrochloric acid having a concentration of 38 mass% or more, p-toluenesulfonic acid, trifluoroacetic acid, trichloroacetic acid, formic acid, and the like.

### (Method of producing lignophenol)

A conventionally known method can be employed as a method of producing the component (B). The method is, for example, a method involving treating lignin in a lignocellulose-based substance with a phenol derivative and extracting the resultant as a lignophenol derivative. A method for the extraction is, for example, each of the following two kinds of methods.

A first method is a method described in JP 2895087 B2. The method is specifically as described below. A liquid phenol derivative is caused to permeate a lignocellulose-based substance such as wood dust so that lignin may be solvated with the phenol derivative. Next, a concentrated acid is added to dissolve the lignocellulose-based material. At this time, a cation at the side chain α-position of a lignin basic constitutional unit is attacked by the phenol derivative, and a lignophenol derivative in which the phenol derivative is introduced into a benzyl position is produced in a phenol derivative phase. Then, the lignophenol derivative is extracted from the phenol derivative phase.
The lignophenol derivative is extracted from the phenol derivative phase as described below. A precipitate obtained by adding the phenol derivative phase to largely excess ethyl ether is collected and dissolved in acetone. An acetone insoluble portion is removed by centrifugal separation, and then an acetone soluble portion is concentrated. The acetone soluble portion is dropped in largely excess ethyl ether, and then a precipitated segment is collected. After the solvent has been removed by distillation from the precipitated segment, the remainder is subjected to a drying treatment. Thus, the lignophenol derivative is obtained as a dried product. It should be noted that a coarse lignophenol derivative can be obtained by simply removing the phenol derivative phase through distillation under reduced pressure. In addition, the acetone soluble portion can be directly used as a solution of the lignophenol derivative in a derivatization treatment (alkali treatment).

A second method is a method described in JP 2001-64494 A. The method is specifically as described below. A solvent in which a solid or liquid phenol derivative has been dissolved is caused to permeate a lignocellulose-based substance. After that, the solvent is removed by distillation (step of sorbing the phenol derivative). Next, a concentrated acid is added to the lignocellulose-based material to dissolve the cellulose component. As a result, a lignophenol derivative is produced in a phenol derivative phase as in the case of the first method. Then, the lignophenol derivative is extracted.
The lignophenol derivative can be extracted as in the case of the first method. Alternatively, the following method is applicable as another extraction method. The entire reaction liquid after the treatment with the concentrated acid is charged into excess water. An insoluble segment is collected by centrifugal separation, and is then deoxidized and dried. Acetone or an alcohol is added to the dried product to extract the lignophenol derivative. Further, the soluble segment is dropped in excess ethyl ether or the like as in the case of the first method so that the lignophenol derivative may be obtained as an insoluble segment.

Of those two kinds of methods, i. e. , the first and second methods, the second method, in particular, the latter extraction method, that is, the method involving extracting and separating the lignophenol derivative with acetone or an alcohol is economical because a small usage of the phenol derivative suffices. In addition, the method qualifies for the synthesis of a large amount of the lignophenol derivative because a large amount of the lignocellulose-based material can be treated with a small amount of the phenol derivative.

The component (B) obtained by any such method as described above generally has such characteristics as described below, provided that the characteristics of the component (B) to be used in the present invention are not limited to the following ones:
(1) the component has a weight-average molecular weight of about 3,000 to 5,000;
(2) the component is nearly free of conj ugated systems in its molecules, and has an extremely pale tone;
(3) the component has a melting point of about 170°C if derived from a coniferous tree, or about 130°C if derived from a broadleaf tree;
(4) the component is a lignin derivative provided with high phenol property because the component has an extremely large amount of phenolic hydroxyl groups as a result of selective grafting of the phenol derivative to the side chain α-position;
(5) the self-condensation of the component is suppressed because the aromatic nucleus of a lignin constitutional unit and the aromatic nucleus of the phenol derivative grafted to the side chain α -position form a diphenylmethane type structure; and
(6) the component is easily soluble in various solvents such as methanol, ethanol, acetone, dioxane, pyridine, tetrahydrofuran (THF), and dimethylformamide (DMF).

In addition, the component (B) obtained by any such method as described above can be further derivatized through an alkali treatment before its use.
A lignophenol derivative obtained from natural lignin by a phase separation process is entirely stable because the α -position of its activated carbon is blocked with a phenol derivative. However, a phenolic hydroxyl group of the derivative easily dissociates under an alkaline condition, and the resultant phenoxide ion attacks the β -position of adjacent carbon if sterically possible. As a result, an aryl ether bond at the β -position cleaves so that the molecular weight of the lignophenol derivative may be reduced. Further, a phenolic hydroxyl group present at an introduced phenol nucleus moves toward a lignin parent body. Therefore, the alkali-treated derivative is expected to have improved hydrophobicity as compared with that of the lignophenol derivative before the alkali treatment.
In this case, an alkoxide ion present at the γ-position of carbon or a carbanion of a lignin aromatic nucleus is expected to attack the β-position. However, the attack requires much higher energy than that required by the phenoxide ion. Therefore, the neighboring group effect of the phenolic hydroxyl group of the introduced phenol nucleus is predominantly expressed under a mild alkaline condition, or a further reaction occurs under a harsher condition so that the phenolic hydroxyl group of a cresol nucleus that has been etherized once may be reproduced. As a result, the molecular weight of the lignophenol derivative is further reduced, and the number of hydroxyl groups increases. Accordingly, an improvement in hydrophilicity is expected.

Further, the lignophenol derivative and the lignophenol derivative obtained by treating the former lignophenol derivative with an alkali each show assorted characteristics because phenolic and alcoholic hydroxyl groups are present. A derivative that shows other characteristics different from those described above can be obtained by protecting the hydroxyl groups. A method of protecting the hydroxyl groups is, for example, a method involving protecting the hydroxyl groups with protective groups such as an acyl group (e.g., an acetyl group, a propionyl group, or a benzyl group, and preferably an acyl group).

### [Component (C)]

In the polycarbonate resin composition of the present invention, (C) the polylactic acid and/or the copolymer containing a polylactic acid can be incorporated as a resin mixture by being mixed with (A) the polycarbonate resin described above.
The polylactic acid may be used alone as the component (C), the polylactic acid or the copolymer containing the polylactic acid may be used as the component, or the polylactic acid and the copolymer may be used in combination as the component.

### (Polylactic acid)

Any one of L-lactic acid, D-lactic acid, and racemic lactic acid may be used as lactic acid serving as a raw material for the polylactic acid, and a product obtained by each of a chemical synthesis method and a fermentation synthesis method can be used. From the viewpoint of bio-recycling, a product obtained by fermenting the starch of corn or the like having a small number of environmental load factors with lactic acid is preferably used.

Also permitted is a product obtained from such lactic acid as described above as a raw material by each of the following methods:
(1) a two-stage process in which a lactide obtained through a cyclization reaction is subjected to ring-opening polymerization so that a polymer may be obtained; and
(2) a one-stage process in which lactic acid is directly polymerized so that a polymer may be obtained.

The two-stage process described in the above-mentionedsection (1) provides (C) the polylactic acid having a high molecular weight in accordance with the following reaction formula.

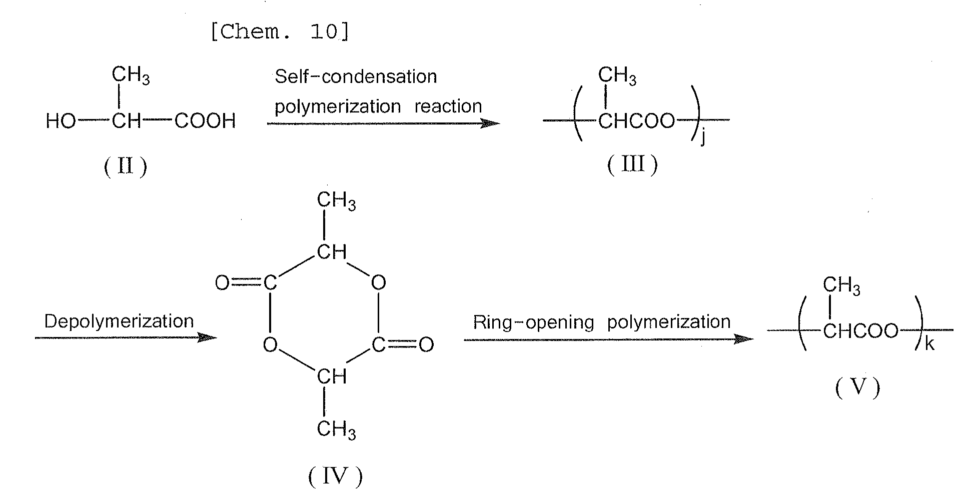

(j and k each represent a degree of polymerization.)
First, lactic acid (II) is subjected to a self-condensation polymerization reaction so that a low-molecular weight polylactic acid (III) may be obtained. After that, the low-molecular weight polylactic acid (III) is depolymerized so that a lactide (IV) as a cyclic diester may be obtained. Next, the lactide (IV) is subjected to ring-opening polymerization. Thus, a high-molecular weight polylactic acid (V) is obtained.
The polylactic acid to be used in the present invention has a weight-average molecular weight in the range of typically 100,000 to 250,000, preferably 130,000 to 200,000. In addition, the polylactic acid has a melting point of typically about 130 to 160°C and a glass transition temperature (Tg) of typically about 50 to 60°C.

The use of the polylactic acid can impart high fluidity, high solvent resistance, and high impact resistance to the polycarbonate resin composition of the present invention.

### (Copolymer containing polylactic acid)

The copolymer containing a polylactic acid (which may hereinafter be referred to as "polylactic acid-based copolymer") is preferably a copolymer of the polylactic acid and an aliphatic polyester except the polylactic acid, though the copolymer is not particularly limited as long as the copolymer contains the polylactic acid.
The aliphatic polyester except the polylactic acid is preferably a copolymer formed of, in particular, an aliphatic diol, a dicarboxylic acid, and the like, and is more preferably a block copolymer formed of an aliphatic dicarboxylic acid and an aliphatic diol.
Examples of the aliphatic diol that can be used in the above-mentioned aliphatic polyester except the polylactic acid include glycol compounds such as ethylene glycol, propylene glycol, 1,3-propanediol, 1,3-butanediol, 1,4-butanediol, heptanediol, hexanediol, octanediol, nonanediol, decanediol, 1,4-cyclohexanedimethanol, neopentyl glycol, glycerin, pentaerythritol, polyethylene glycol, polypropylene glycol, polytetramethylene glycol, and the like. Those compounds may be used alone, or two or more kinds thereof may be used in combination.

Further, examples of the aliphatic dicarboxlic acid that can be used in the above-mentioned aliphatic polyester except the polylactic acid include dicarboxylic acids such as oxalic acid, succinic acid, adipic acid, sebacic acid, azelaic acid, dodecanedioic acid, malonic acid, glutaric acid, cyclohexane dicarboxylic acid, anthracene dicarboxylic acid, 4,4'-diphenyl ether dicarboxylic acid, 5-sodium sulfoisophthalic acid, and 5-tetrabutyl phosphonium isophthalic acid, dimethylester bodies thereof, and the like. Those compounds may be used alone, or two or more kinds thereof may be used in combination.
Specific examples of the above-mentioned aliphatic polyester except the polylactic acid include polybutylene sebacate, polypropylene sebacate, polyethylene sebacate, polyethylene oxalate, polypropylene oxalate, polybutylene oxalate, polyneopentyl glycol oxalate, polyethylene succinate, polypropylene succinate, polybutylene succinate, polybutylene adipate, polypropylene adipate, polyethylene adipate, and the like. Of those, polybutylene succinate and polybutylene adipate are particularly preferred.

The aliphatic polyester except the polylactic acid has a glass transition point (Tg) of preferably 0°C or less, more preferably -10°C or less by itself.
In addition, the aliphatic polyester except the polylactic acid is more preferably easy to distribute in (A) the polycarbonate resin.
When (C) the polylactic acid and the polylactic acid-based copolymer are blended in combination, compatibility between (A) the polycarbonate resin and (C) the polylactic acid is improved, and further, the impact resistance can be improved while the reduction of the fluidity is suppressed and the external appearance of a molded body is made excellent. It should be noted that, when the polylactic acid and the polylactic acid-based copolymer are used in combination as the component (C), their respective contents have only to be appropriately determined to such an extent that the characteristics of the polycarbonate resin composition of the present invention are maintained.

### [Contents of component (A), component (B), and component (C)]

The contents of (A) the polycarbonate resin and (B) the lignophenol in the polycarbonate resin composition of the present invention are as described below. The content of the component (A) is 99 to 50 mass%, and the content of the component (B) is 1 to 50 mass%. When the content of the component (A) is less than 50 mass%, the reductions of the impact resistance, flame retardancy, and heat resistance become remarkable. In addition, when the content of the component (B) is less than 1 mass%, improving effects on the fluidity and flame retardancy cannot be obtained. The content of the component (A) is preferably 98 to 70 mass%, and the content of the component (B) is preferably 2 to 30 mass%.

The content of (C) the polylactic acid and/or the copolymer containing the polylactic acid in the polycarbonate resin composition of the present invention is as described below. In the resin mixture formed of (A) the polycarbonate resin and (C) the polylactic acid and/or the copolymer containing the polylactic acid, the components are incorporated at such ratios that the content of the component (A) may be 99 to 50 mass% and the content of the component (C) may be 1 to 50 mass%. When the content of the component (A) is less than 50 mass%, the reductions of the impact resistance, flame retardancy, and heat resistance become remarkable. The content of the component (A) is preferably 98 to 70 mass%, and the content of the component (C) is preferably 2 to 30 mass%.
In addition, the content of the component (B) is 1 to 50 parts by mass with respect to 100 parts by mass of the resin mixture formed of the component (A) and the component (C). When the content of the component (B) is less than 1 part by mass, improving effects on the fluidity and flame retardancy cannot be obtained. The content of the component (B) is preferably 2 to 30 parts by mass.

### [Arbitrary component]

The polycarbonate resin composition of the present invention can contain an antioxidant as well as the component (A), the component (B), and the component (C). Examples of the antioxidant include phenol-, phosphorus-, and sulfur-based antioxidants and the like.
Examples of the phenol-based antioxidant may include commercially available products such as IRGANOX 1010 (trade name, Ciba Specialty Chemicals Co. , Ltd.), IRGANOX 1076 (trade name, Ciba Specialty Chemicals Co., Ltd.), IRGANOX 1330 (trade name, Ciba Specialty Chemicals Co., Ltd.), IRGANOX 3114 (trade name, Ciba Specialty Chemicals Co., Ltd.), IRGANOX 3125 (trade name, Ciba Specialty Chemicals Co., Ltd.), IRGANOX 3790 (trade name, Ciba Specialty Chemicals Co., Ltd.) BHT, Cyanox 1790 (trade name, American Cyanamid Co.), and Sumilizer GA-80 (trade name, Sumitomo Chemical Industries Co., Ltd.).

Examples of the phosphorus-based antioxidant may include commercially available products such as Irgafos 168 (trade name, Ciba Specialty Chemicals Co., Ltd.), Irgafos 12 (trade name, Ciba Specialty Chemicals Co., Ltd.), Irgafos 38 (trade name, Ciba Specialty Chemicals Co., Ltd.), ADKSTAB C (trade name, ADEKA CORPORATION), ADKSTAB 329K (trade name, ADEKA CORPORATION), ADKSTAB PEP36 (trade name, manufactured by ADEKA CORPORATION), ADKSTAB PEP- 8 (trade name, ADEKA CORPORATION), Sardstab P-EPQ (trade name, Clariant), Weston 618 (trade name, GE Specialty Chemicals Inc.), Weston 619G (trade name, GE Specialty Chemicals Inc.), and Weston-624 (trade name, GE Specialty Chemicals Inc.).
Examples of the sulfur-based antioxidant may include commercially available products suchas DSTP (Yoshitomi) (trade name, Yoshitomi Pharmaceutical Co., Ltd.), DLTP (Yoshitomi) (trade name, Yoshitomi Pharmaceutical Co., Ltd.), DLTOIB (trade name, Yoshitomi Pharmaceutical Co., Ltd.), DMTP (Yoshitomi) (trade name, Yoshitomi Pharmaceutical Co., Ltd.), Seenox 412S (trade name, SHIPRO KASEI LTD.), and Cyanox 1212 (trade name, American Cyanamid Co.).

Further, an additive component can be added and incorporated as required. Examples of the additive component include antistatic agents, polyamide-polyether block copolymers (for imparting permanent antistatic performance), benzotriazole- and benzophenone-based UV absorbers, hindered amine-based light stabilizers (weathering agents), antibacterial agents, compatibilizers, colorants (dyes and pigments), flame retardants, and the like. The addition amount of the additive component is not particularly limited as long as the characteristics of the polycarbonate resin composition of the present invention are maintained.

### [Kneading and molding]

The polycarbonate resin composition of the present invention is obtained by: blending the component (A), the component (B), and the component (C) at the ratios; further adding the additive component to be used as required at a proper ratio; and kneading the mixture. The blending and the kneading in this case can each be performed by a method involving preliminarily kneading the components with an instrument that is typically used such a ribbon blender or a drum tumbler, and then using a Henschel mixer, a Banbury mixer, a uniaxial screw extruder, a biaxial screw extruder, a multi-axial screw extruder, a co-kneader, or the like. A heating temperature at the time of the kneading is appropriately selected from the range of 240 to 300°C, generally.
The polycarbonate resin composition of the present invention is produced in a pellet form with the above-mentioned melt-kneading molding machine. Alternatively, various molded articles can be produced from the resultant pellet as a raw material by an injection molding method, an injection compression molding method, an extrusion molding method, a blow molding method, a press molding method, a vacuum molding method, a foam molding method, and the like. In particular, a pellet-shaped molding raw material can be produced by the above-mentioned melt-kneading method, and then the pellet can be suitably used in the production of an inj ection-molded article by injection molding or injection compression molding.

### [Example]

The present invention is described in more detail by way of examples. However, the present invention is by no means limited by these examples.

### [Examples 1 to 3 and Comparative Examples 1 to 4]

The performance tests of resin compositions obtained in Examples 1 to 3 and Comparative Examples 1 to 4 were performed as described below.

### Melt index (MI): fluidity

Measurement was performed under the measurement conditions of a resin temperature of 260°C and a load of 21.18 N in conformity with the ASTM standard D-1238.

### Izod impact strength (IZOD): impact resistance

Measurement was performed with a test piece having a thickness of 1/8 inch in conformity with the ASTM standard D-256 at a measurement temperature of 23°C.

### Oxygen index (LOI): flame retardancy

Measurement was performed in conformity with the ASTM standard D-2863. The term "oxygen index" refers to a value for the lowest oxygen concentration needed for a test piece to keep burning represented in the unit of vol% in the air.

### Glass transition temperature (Tg): heat resistance

A temperature was increased with a DSC apparatus (Diamond DSC, manufactured by PerkinElmer, Inc.) from room temperature at 10 °C/min, and a glass transition temperature was determined from the resultant endothermic curve.

In addition, the respective components used in Examples 1 to 3 and Comparative Examples 1 to 4 are as described below. Component (A): polycarbonate resin
Aromatic polycarbonate: trade name "TARFLON A1700", manufactured by Idemitsu Kosan Co., Ltd.

### Component (B): lignophenol

### Lignocresol:

Beech wood dust was immersed in an acetone solution containing p-cresol so that the wood dust was caused to sorb p-cresol. 72-mass% sulfuric acid was added to the wood dust after the sorption, and then the mixture was vigorously stirred. After the stirring had been stopped, clear water was added to the mixture, and then the resultant was left to stand. An operation of decanting the supernatant was repeated six times so that the acid and excess p-cresol were removed. The precipitate in the container was dried, and then acetone was added to the dried product to extract a lignocresol. After that, acetone was removed by distillation. Specifically, the same procedure as that in Example 1 of JP 2001-64494 A was adopted. Component (C):
Polylactic acid: trade name "LACEA H100", manufactured by Mitsui Chemicals, Inc.
   (Antioxidant):
IRGANOX 1076: trade name, phenol-based antioxidant, manufactured by Ciba Specialty Chemicals Co., Ltd.
ADKSTAB C: trade name, phosphorus-based antioxidant, manufactured by ADEKA CORPORATION
   (Others):
Flame retardant: trade name "PX-201", manufactured by DAIHACHI CHEMICAL INDUSTRY CO., LTD.

### Examples 1 to 3 and Comparative Examples 1 to 4

The above-mentioned respective components were blended at ratios shown in Table 1. The mixture was supplied to an extruder (model name: VS40, manufactured by TANABE PLASTICS MACHINERY CO., LTD.), and was then melted and kneaded at 240°C so as to be pelletized. The resultant pellet was dried at 120°C for 12 hours, and was then subjected to injection molding with an injection molding machine (manufactured by TOSHIBA MACHINE CO., LTD., type: IS100N) under the conditions of a cylinder temperature of 260°C and a mold temperature of 80°C. Thus, a test piece was obtained. The resultant test piece was evaluated for its performance by the above-mentioned performance tests. Table 1 shows the results.

[Table 1]

**Table 1**

| | | | Example | | | Comparative Example | | | |
|---|---|---|---|---|---|---|---|---|---|
| | | | 1 | 2 | 3 | 1 | 2 | 3 | 4 |
| Resin Composition iron | (A) Polycarbonate (%)^{*} | TARFLON A1700 | 98 | 90 | 70 | 100 | 45 | - | - |
| | (B) Lignophenol (%)^{*} | Lignocresol | 2 | 10 | 30 | - | 55 | 10 | 5 |
| | (C) Polylactic acid (%)* | LACEA H100 | - | - | - | - | - | 90 | 90 |
| | Antioxidant (part(s))^{*} | IRGANOX 1076 | 0.2 | 0.2 | 0.2 | 0.2 | 0.2 | 0.2 | 0.2 |
| | | ADKSTAB C | 0.1 | 0.1 | 0.1 | 0.1 | 0.1 | 0.1 | 0.1 |
| | Flame retardant (%)^{*} | PX-201 | - | - | - | - | - | - | 5 |
| Performance evaluation | Melt index (MI) g/10 minutes | | 6 | 18 | 45 | 3 | 120 | >250 | >250 |
| | Izod impact strength (IZOD) KJ/m² | | 65 | 15 | 10 | 75 | 1 | 1 | 1 |
| | Oxygen index (LOI) % | | 29 | 31 | 34 | 27 | 34 | 23 | 24 |
| | Glass transition temperature (Tg) °C | | 148 | 137 | 120 | 152 | 93 | 55 | 51 |

| | | | | | | | | | |
|---|---|---|---|---|---|---|---|---|---|
| (%)^{*}: mass in the total of the component (A), the component (B), the component (C), and the flame retardant, i.e., 100 mass% (part(s))^{*}: part(s) by mass with respect to the total of the component (A), the component (B), the component (C), and the flame retardant, i.e., 100 parts by mass | | | | | | | | | |

Table 1 shows the following.

### Examples 1 to 3

The addition of (B) the lignophenol to (A) the polycarbonate resin improves the fluidity and the flame retardancy. In addition, the heat resistance (Tg) is 100°C or more, which is at such a level that no problems arise in practical use.

### Comparative Examples 1 to 4

The addition of (B) the lignophenol in a larger amount than a predetermined amount significantly reduces the impact resistance and the heat resistance (Comparative Example 2). In addition, when (A) the polycarbonate resin is not used and only (C) the polylactic acid is used, the impact resistance and the heat resistance significantly reduce (Comparative Examples 3 and 4).

### [Examples 4 to 7, Comparative Examples 5 and 6, and Reference Example 1]

The performance tests of resin compositions obtained in Examples 4 to 7, Comparative Examples 5 and 6, and Reference Example 1 were performed as described below in terms of a deflection temperature under load and a molding appearance as well as the melt index, the Izod impact strength, and the oxygen index in Examples 1 to 3 and Comparative Examples 1 to 4 described above.

### Deflection temperature under load: heat resistance

Measurement was performed in conformity with the ASTM standard D-648 under a bending stress of 1.8 MPa.

### Molding appearance

Visual observation was performed. The case where an external appearance failure such as a pearly luster or silver was not observed was regarded as "o" while the case where an external appearance failure such as a pearly luster or silver was observed was regarded as "x".

In addition, the respective components used in Examples 4 to 7, Comparative Examples 5 and 6, and Reference Example 1 are as described below.

### Component (A): polycarbonate resin

Aromatic polycarbonate resin: trade name "TARFLON A1700", manufactured by Idemitsu Kosan Co., Ltd.

### Component (B): lignophenol

### Lignocresol:

Beech wood dust was immersed in an acetone solution containing p-cresol so that the wood dust was caused to sorb p-cresol. 72 -mass% sulfuric acid was added to the wood dust after the sorption, and then the mixture was vigorously stirred. After the stirring had been stopped, clear water was added to the mixture, and then the resultant was left to stand. An operation of decanting the supernatant was repeated six times so that the acid and excess p-cresol were removed. The precipitate in the container was dried, and then acetone was added to the dried product to extract a lignocresol. After that, acetone was removed by distillation. Specifically, the same procedure as that in Example 1 of JP 2001-64494 A was adopted. Component (C): Polylactic acid and/or copolymer containing polylactic acid
Polylactic acid: trade name "LACEA H100", manufactured by Mitsui Chemicals, Inc.
Polylactic acid-aliphatic polyester copolymer: trade name Plamate PD-150, manufactured by DIC Corporation

### (Antioxidant):

IRGANOX 1076: trade name, phenol-based antioxidant, manufactured by Ciba Specialty Chemicals Co., Ltd.
ADKSTAB C: trade name, phosphorus-based antioxidant, manufactured by ADEKA CORPORATION

### Examples 4 to 7, Comparative Examples 5 and 6, and Reference Example 1

The above-mentioned respective components were blended at ratios shown in Table 2. The mixture was supplied to an extruder (model name: VS40, manufactured by TANABE PLASTICS MACHINERY CO., LTD.), and was then melted and kneaded at 240°C so as to be pelletized.
The resultant pellet was dried at 120°C for 12 hours, and was then subj ected to injection molding with an injection molding machine (manufactured by TOSHIBA MACHINE CO., LTD., type: IS100N) under the conditions of a cylinder temperature of 260°C and a mold temperature of 80°C. Thus, a test piece was obtained.
The resultant test piece was evaluated for its performance by the above-mentioned performance tests. Table 2 shows the results.

[Table 2]

**Table 2**

| | | | | Example | | | | Comparative Example | | Reference Example |
|---|---|---|---|---|---|---|---|---|---|---|
| | | | | 4 | 5 | 6 | 7 | 5 | 6 | 1 |
| Resin Composition | (A) Polycarbonate (%)^{*} | | | 90 | 70 | 70 | 70 | 70 | 70 | 100 |
| | (B) Lignophenol (part(s)) | | | 2 | 10 | 20 | 20 | - | 55 | 10 |
| | (C) | Polylactic acid (%)^{*} | | 10 | 30 | 30 | - | 30 | 30 | - |
| | | Polylactic acid-aliphatic polyester copolymer (%)^{*} | | - | - | - | 30 | - | - | - |
| | Antioxidant | | IRGANOX 1076 (part(s)) | 0.2 | 0.2 | 0.2 | 0.2 | 0.2 | 0.2 | 0.2 |
| | | | ADKSTAB C (part(s)) | 0.1 | 0.2 | 0.2 | 0.2 | 0.1 | 0.2 | 0.1 |
| Performance evaluation | Melt index (MI) g/10 minutes | | | 22 | 30 | 35 | 30 | 20 | >250 | 18 |
| | Izod impact strength (IZOD) kJ/m² | | | 60 | 10 | 5 | 15 | 3 | 1 | 15 |
| | Oxygen index (LOI) % | | | 28 | 26 | 28 | 30 | 24 | 32 | 31 |
| | Deflection temperature under load °C | | | 115 | 95 | 80 | 80 | 105 | 50 | 110 |
| | Molding appearance | | | ○ | ○ | ○ | ○ | × Pearly luster | ○ | × Silver |

| | | | | | | | | | | |
|---|---|---|---|---|---|---|---|---|---|---|
| (%)^{*}_{:} mass% in the total amount of the component (A) and the component (C), i.e., 100 mass% (part (s)) : part (s) by mass with respect to the total of the component (A) and the component (C), i.e., 100 parts by mass | | | | | | | | | | |

Table 2 shows the following.

### Examples 4 to 7

Blending (B) the lignophenol into the resin mixture formed of (A) the polycarbonate resin and (C) the polylactic acid and/or the copolymer containing the polylactic acid not only improves the fluidity and the flame retardancy but also provides a good molding appearance. Further, the deflection temperature under load is 80°C or more, which is at such a level that no problems arise when the polycarbonate resin composition is utilized in an OA instrument or a household electrical appliance. In addition, Example 5 and Reference Example 1 show that the use of the resin mixture containing (C) the polylactic acid and/or the copolymer containing the polylactic acid provides an additionally excellent molding appearance.

### Comparative Examples 5 and 6

When (B) the lignophenol is not blended, a balanced polycarbonate resin composition excellent in all of fluidity, flame retardancy, impact resistance, and molding appearance cannot be obtained (Comparative Example 5). In addition, the addition of (B) the lignophenol in a larger amount than a predetermined amount significantly reduces the impact resistance and the heat resistance (Comparative Example 6).

### [Industrial Applicability]

The polycarbonate resin composition of the present invention maintains high impact resistance and high heat resistance as excellent characteristics of polycarbonate, and has high fluidity and excellent flame retardancy by using the lignophenol serving as an environmentally friendly biomass raw material. Further, the polycarbonate resin composition provides a molded body excellent in molding appearance by containing the polylactic acid and/or the copolymer containing the polylactic acid. Further, the polycarbonate resin composition that can excellently correspond to measures needed for environmental protection such as the curtailment of carbon dioxide emissions and the reduction of fossil materials can be provided by using the lignophenol. Accordingly, the polycarbonate resin composition of the present invention can suitably find use in fields where those characteristics are needed, in particular, electrical and electronic instruments, information and communication instruments, OAinstruments, anautomobile field, a building material field, and the like.

## Claims

1. A polycarbonate resin composition, comprising:
99 to 50 mass% of (A) a polycarbonate resin; and
1 to 50 mass% of (B) a lignophenol having a structure represented by the following general formula (I): 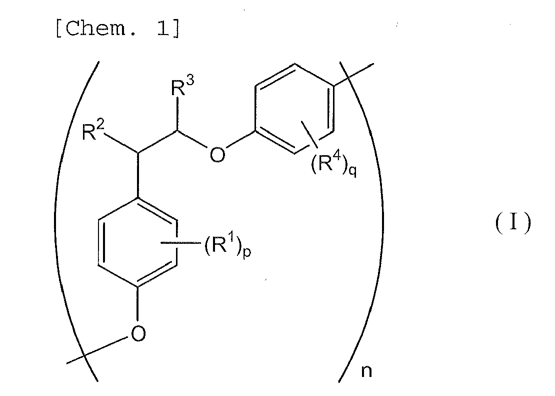
[wherein R¹ and R⁴ each independently represent an alkyl group, an aryl group, an alkoxy group, an aralkyl group, or a phenoxy group;
R² represents a hydrogen atom, an alkyl group, an aryl group, an alkyl-substituted aryl group, an alkoxy group, or a phenoxy group;
R³ represents an alkyl group, an aryl group, an alkyl -substituted aryl group, or -OR⁵ (where R⁵ represents a hydrogen atom, an alkyl group, or an aryl group); R¹ to R⁵ except hydrogen atoms may each have a substituent;
p and q each independently represent an integer of 0 to 4; and
n represents an integer of 1 or more].

2. A polycarbonate resin composition, comprising 1 to 50 parts by mass of (B) a lignophenol having a structure represented by the following general formula (I) with respect to 100 parts by mass of a resin mixture formed of 99 to 50 mass% of (A) a polycarbonate resin and 1 to 50 mass% of (C) a polylactic acid and/or a copolymer containing a polylactic acid: 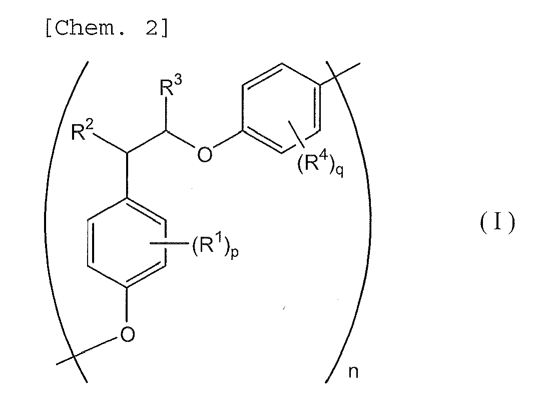 [wherein R¹ and R⁴ each independently represent an alkyl group, an aryl group, an alkoxy group, an aralkyl group, or a phenoxy group;
R² represents a hydrogen atom, an alkyl group, an aryl group, an alkyl-substituted aryl group, an alkoxy group, or a phenoxy group;
R³ represents an alkyl group, an aryl group, an alkyl -substituted aryl group, or -OR⁵ (where R⁵ represents a hydrogen atom, an alkyl group, or an aryl group);
R¹ to R⁵ except hydrogen atoms may each have a substituent;
p and q each independently represent an integer of 0 to 4; and
n represents an integer of 1 or more].

3. The polycarbonate resin composition according to claim 2, wherein the copolymer containing the polylactic acid in the component (C) is a copolymer of the polylactic acid and an aliphatic polyester except the polylactic acid.

4. The polycarbonate resin composition according to any one of claims 1 to 3, wherein (A) the polycarbonate resin is an aromatic polycarbonate resin.

5. The polycarbonate resin composition according to any one of claims 1 to 4, further comprising an antioxidant.
